(19) Europäisches Patentamt
European Patent Office
Office européen des brevets

(11) Veröffentlichungsnummer: **0 025 979**
**B1**

(12) # EUROPÄISCHE PATENTSCHRIFT

(45) Veröffentlichungstag der Patentschrift: **25.05.83**

(51) Int. Cl.³: **C 08 F 8/44,** C 08 F 2/26, B 01 F 17/00 // C08F212/08

(21) Anmeldenummer: **80105591.4**

(22) Anmeldetag: **18.09.80**

(54) **Wässrige Lösung oder Dispersion eines Styrol/Maleinsäureanhydrid-Copolymers, Verfahren zu ihrer Herstellung und ihre Verwendung.**

(30) Priorität: **22.09.79 DE 2938429**

(43) Veröffentlichungstag der Anmeldung: **01.04.81 Patentblatt 81/13**

(45) Bekanntmachung des Hinweises auf die Patenterteilung: **25.05.83 Patentblatt 83/21**

(84) Benannte Vertragsstaaten: **AT BE CH DE FR GB IT LI LU NL SE**

(56) Entgegenhaltungen:
**FR-A-2 217 274**
**US-A-2 490 489**
**US-A-3 835 122**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Nölken, Ernst, Dr., Dachbergstrasse 16a, D-6232 Bad Soden am Taunus (DE)**

**EP 0 025 979 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wäßrige Lösung oder Dispersion eines Styrol/Maleinsäureanhydrid-Copolymers, Verfahren zu ihrer Herstellung und ihre Verwendung

Die Erfindung bezieht sich auf eine wäßrige Lösung oder Dispersion eines Styrol/Maleinsäureanhydrid-Copolymers, ein Verfahren zu ihrer Herstellung und ihre Verwendung.

Die Herstellung von Copolymeren des Maleinsäureanhydrids mit Vinylverbindungen wie Styrol ist seit langem bekannt (vgl. z. B. Ind. Eng. Chem. 41 [1949], Seite 1509). Diese Copolymeren werden unter Alkalizusatz in Wasser gelöst, da ihre Wirksamkeit als Pigmentdispergiermittel, Schutzkolloid, Verickungsmittel oder Schlichtemittel eine Salzbildung voraussetzt.

Ferner sind Copolymere aus Styrol und Maleinsäureanhydrid bekannt, die ein Styrol/Maleinsäureanhydrid-Molverhältnis von 1 : 1 bis 4 : 1, ein durchschnittliches Molekulargewicht von 400 bis 100 000 und einen Schmelzpunkt von 80 bis 300° C aufweisen (vgl. z. B. US-Patentschrift 3 444 151). Diese Copolymeren werden mit Aminen zu stickstoffhaltigen Copolymeren umgesetzt, die nahezu unlöslich in Wasser oder wäßrigen alkalischen Medien sind; sie werden als Emulgatoren bei der Emulsionspolymerisation von Vinylmonomeren eingesetzt.

Weiterhin ist bekannt, daß bei der Herstellung von Klebstoffen auf Stärkebasis Styrol/Maleinsäureanhydrid-Copolymere verwendet werden, deren Styrol/Maleinsäureanhydrid-Molverhältnis 1 : 1 bis 3 : 1 beträgt und deren Molekulargewicht zwischen 1600 und 50 000 variiert (vgl. US-Patentschrift 3 939 108). Diese Copolymeren werden üblicherweise hergestellt durch Lösungspolymerisation in einem aromatischen Kohlenwasserstoff in Gegenwart eines Radikalbildners als Katalysator bei einer Temperatur von 75 bis 300° C. Sie können nach Zusatz von Ammoniak oder Alkalihydroxid bis zu einem pH-Wert von 8 bis 11 unter Erhitzen in Wasser gelöst werden.

Aufgabe der Erfindung ist die Schaffung einer wäßrigen Lösung oder Dispersion eines Maleinsäureanhydrid-Copolymers, die keine alkalische Reaktion zeigt und als Emulgatorlösung oder -dispersion für Kunststoff-Dispersionen geeignet ist.

Die Erfindung betrifft nun eine wäßrige Lösung oder Dispersion eines hydrolysierten Copolymers aus Styrol und Maleinsäureanhydrid mit einem Styrol/Maleinsäureanhydrid-Molverhältnis von größer als 1 : 1 und einem Molekulargewicht (Zahlenmittel) von mehr als 400 und ist dadurch gekennzeichnet, daßdas Molverhältnis im Bereich von 1,5 : 1 bis 6 : 1 liegt, das Molekulargewicht 500 bis 80 000 beträgt, 1 bis 60 Prozent der Carboxylgruppen des Copolymers neutralisiert sind und der pH-Wert der Lösung oder Dispersion kleiner als 7 ist.

Ferner betrifft die Erfindung ein Verfahren zur Herstellung einer wäßrigen Lösung oder Dispersion eines hydrolysierten Copolymers aus Styrol und Maleinsäureanhydrid, das ein Styrol/Maleinsäureanhydrid-Molverhältnis von größer als 1 : 1 und ein Molekulargewicht (Zahlenmittel) von mehr als 400 aufweist, durch Hydrolyse eines Styrol/Maleinsäureanhydrid-Copolymers und teilweise Neutralisation mit einem anorganischen Neutralisationsmittel, das dadurch gekennzeichnet, ist, daß ein Copolymer mit einem Styrol/Maleinsäureanhydrid-Molverhältnis von 1,5 : 1 bis 6 : 1 und einem Molekulargewicht von 500 bis 80 000 in Gegenwart von Wasser und in Gegenwart von soviel Ammoniak oder eines Alkalihydroxids oder eines Erdalkalihydroxids oder Zinkoxid auf eine Temperatur von 75 bis 250° C erhitzt wird, daß 1 bis 60 Prozent der Carboxylgruppen des Copolymers neutralisiert werden.

Schließlich betrifft die Erfindung auch die Verwendung der vorgenannten Lösung oder Dispersion als Stabilisatorlösung oder -dispersion für wäßrige Dispersionen und bei der Dispersionspolymerisation von Vinylverbindungen.

Das erfindungsgemäß verwendete Styrol/Maleinsäureanhydrid-Copolymer weist ein Molekulargewicht (Zahlenmittel) von 500 bis 80 000, vorzugsweise von 800 bis 30 000, auf. Das Styrol/Maleinsäureanhydrid-Molverhältnis beträgt 1,5 : 1 bis 6 : 1, vorzugsweise 1,6 : 1 bis 4 : 1.

Das Styrol/Maleinsäureanhydrid-Copolymer wird erfindungsgemäß in Gegenwart von Wasser und in Gegenwart eines anorganischen Neutralisationsmittels auf eine Temperatur von 75 bis 250° C, vorzugsweise 85 bis 180° C, erhitzt und hydrolysiert. Die dadurch entstehenden freien Carboxylgruppen des Copolymers werden dabei zu 1 bis 60 Prozent, vorzugsweise 6 bis 50 Prozent, neutralisiert. Bei dieser alkalischen Behandlung des Copolymers beträgt dessen Konzentration 5 bis 50 Gewichtsprozent, vorzugsweise 10 bis 30 Gewichtsprozent (bezogen auf die Gesamtmenge aus Wasser und Copolymer). Je nach Konzentration und Zusammensetzung des Copolymers sowie der angewandten Temperatur dauert die Behandlung 5 min bis 5 Stunden, vorzugsweise 10 bis 200 Minuten. Ein hoher Styrolanteil im Copolymer, eine hohe Copolymerkonzentration und eine niedrige Behandlungstemperatur erfordern im allgemeinen eine erhöhte Behandlungszeit; durch Variation der angegebenen Parameter kann demnach die Behandlungszeit verändert werden. Das Arbeiten unter Inertgas, z. B. Stickstoff, ist empfehlenswert.

Das Styrol/Maleinsäureanhydrid-Copolymer enthält gegebenenfalls noch ein oder mehrere weitere Monomere in einer Menge bis zu 20 Molprozent (bezogen auf die Gesamtmonomermenge) einpolymerisiert. Geeignet sind olefinisch ungesättigte Verbindungen wie Vinylester, Vinylether, Acrylsäureester und ungesättigte Carbonsäuren wie Acrylsäure, Methacrylsäure, Itaconsäure, Crotonsäure, Vinylsulfonsäure und N-Methacryloylaminopropansulfonsäure.

Als anorganisches Neutralisationsmittel dient Ammoniumhydroxid oder ein Alkalihydroxid, z. B. Lithiumhydroxid, Natriumhydroxid und Kaliumhydroxid, oder ein Erdalkalihydroxid, z. B. Magnesiumhydroxid und Calciumhydroxid, sowie Zinkoxid. Statt eines einzelnen Neutralisationsmittels kann auch ein Gemisch mehrerer Neutralisationsmittel verwendet werden. Die einzusetzende Menge des Neutralisationsmittels ist so zu wählen, daß der gewünschte Neutralisationsgrad erhalten wird; sie liegt im Bereich von 0,02 bis 1,2 Basenäquivalent, vorzugsweise 0,12 bis 1 Basenäquivalent (bezogen auf ein Mol Maleinsäureanhydrid im Copolymer). Je nach Art und Menge des Neutralisationsmittels wird eine Copolymer-Lösung oder -Dispersion erhalten; für die Herstellung einer Lösung wird eine höhere Menge Neutralisationsmittel verwendet als für die Herstellung einer Dispersion.

Zur Herstellung einer sauren Lösung eines hydrolysierten Styrol/Maleinsäureanhydrid-Copolymers empfiehlt es sich, die alkalische Behandlung in Gegenwart eines Emulgators, vorzugsweise eines anionischen Emulgators, durchzuführen. Als Emulgatoren eigenen sich insbesondere Alkalisalze oder Ammoniumsalze von Alkylsulfonsäuren, Arylsulfonsäuren oder Alkylarylsulfonsäuren sowie den entsprechenden Schwefelsäuren, Phosphorsäuren oder Phosphonsäuren, wobei die genannten Verbindungen gegebenenfalls Oxyethylen-Einheiten zwischen dem jeweiligen Kohlenwasserstoffrest — mit vorzugsweise 10 bis 18 Kohlenstoffatomen — und der anionischen Gruppe aufweisen; die oxethylierten Verbindungen enthalten vorzugsweise 5 bis 30 Ethylenoxideinheiten. Beispiele für geeignete Emulgatoren sind Natriumlaurylsulfat, Natriumoctylphenolglykolethersulfat, Natriumdodecylbenzolsulfonat, Natriumlauryldiglykolsulfat sowie die Ammoniumsalze von oxethyliertem und sulfatiertem Tri-t-butylphenol, t-Butylphenol und Nonylphenol.

Der Emulgator wird in einer Menge von 3 bis 100 Gewichtsprozent, vorzugsweise 5 bis 25 Gewichtsprozent, eingesetzt (bezogen auf das Styrol/Maleinsäureanhydrid-Copolymer).

Die erfindungsgemäße Copolymer-Dispersion kann auch in eine Lösung überführt werden, indem sie nach Zugabe eines Emulgators der vorgenannten Art auf eine Temperatur innerhalb des Bereichs der obengenannten Behandlungstemperatur erhitzt wird.

Die erfindungsgemäße wäßrige Lösung oder Dispersion eines hydrolysierten Copolymers aus Styrol und Maleinsäureanhydrid zeigt eine saure Reaktion. Ihr pH-Wert ist kleiner als 7 und vorzugsweise kleiner als 6; besonders vorteilhaft ist eine Lösung oder Dispersion mit einem pH-Wert von 2,0 bis 5,7. Der Copolymergehalt der Lösung oder Dispersion liegt im Bereich von 5 bis 50 Gewichtsprozent, vorzugsweise 10 bis 30 Gewichtsprozent. Die Viskosität der Lösung oder Dispersion beträgt 20 bis 20 000 mPa · s, vorzugsweise 50 bis 3000 mPa · s (gemessen nach Epprecht).

Die erfindungsgemäße Copolymer-Lösung oder -Dispersion wird als Emulgier-, Dispergier-, Schlichte-, Leimungs-, Verdickungs-, Flockungs- und Hydrophobiermittel und auf dem Textil-, Anstrich-, Klebstoff- und Papiersektor als Beschichtungs- und Bindemittel eingesetzt. Auf Materialien wie Holz, Papier, Keramik, Metall oder Kunststoff wird das gelöste oder dispergierte Copolymer nach Aufbringen der Lösung oder Dispersion durch Entfernen des Wassers oder durch elektrochemische Abscheidung aufgetragen.

Die Lösung oder Dispersion eignet sich ausgezeichnet zur Stabilisierung von wäßrigen Dispersionen natürlicher oder synthetischer, anorganischer oder organischer Stoffe, z. B. Cellulose, Kunststoffe, Pigmente und Füllstoffe. Die Copolymer-Lösung oder -Dispersion wird ferner bei der Suspensions- oder Emulsionspolymerisation von Vinylverbindungen, insbesondere Vinylester und Acrylsäureester, eingesetzt. Die so stabilisierten Kunststoffdispersionen zeigen eine erhöhte Stabilität gegenüber Scherkräften und Pigmenten. Der Zeitpunkt der Zugabe der Stabilisator-Lösung oder -Dispersion ist dabei unerheblich; die Zugabe kann mit gleichem Erfolg während der Herstellung der zu stabilisierenden Dispersion oder danach erfolgen.

Die erfindungsgemäße Coplymer-Lösung oder -Dispersion wird vor allem bei der Polymerisation von Vinylverbindungen eingesetzt, die in wäßrigem Medium unter sauren Bedingungen polymerisiert werden. Besonders geeignete Monomere sind olefinisch ungesättigte Verbindungen der Formel

$$\begin{array}{l} H_2C=C-R^1 \\ \qquad\;\; | \\ \qquad\;\, R^2 \end{array}$$

in der $R^1$ ein Wasserstoffatom oder ein Methylrest ist und $R^2$ (a) einen Alkylcarboxyrest mit 2 bis 18, vorzugsweise 2 bis 12 Kohlenstoffatomen, (b) einen Alkoxyrest mit 1 bis 4 Kohlenstoffatomen, (c) eine Nitrilgruppe, (d) ein Halogenatom, vorzugsweise ein Chloratom, (e) eine Carboxylgruppe oder Sulfogruppe, (f) einen Alkoxycarbonylrest mit 2 bis 12, vorzugsweise 2 bis 9 Kohlenstoffatomen, (g) einen Aminocarbonylrest, (h) ein Wasserstoffatom, (i) einen Phenylrest oder (k) einen Vinylrest bedeutet.

Als Beispiele für solche olefinisch ungesättigten Verbindungen seien genannt

(a) Vinylester von aliphatischen Carbonsäuren mit 2 bis 18, vorzugsweise 2 bis 12 Kohlenstoffatomen, z. B. Vinylacetat, Vinylpropionat, Vinylbutyrat, Vinylpivalat, Vinylisononat, Vinyllaurat und Vinyldecanate sowie Vinylester eines Gemisches von Monocarbonsäuren mit 9 bis 11 Kohlenstoffatomen,
(b) Vinylether, z. B. Vinylmethylether, Vinylethylether und Vinyl-n-butylether,
(c) Acrylnitril und Methacrylnitril,

(d) Vinylhalogenide, z. B. Vinylchlorid und Allylchlorid,
(e) ungesättigte Monocarbonsäuren, z. B. Acrylsäure, Methacrylsäure und Vinylsulfonsäure,
(f) Acrylsäureester oder Methacrylsäureester von einwertigen Alkanolen mit 1 bis 11, vorzugsweise 1 bis 8 Kohlenstoffatomen, z. B. Methylacrylat, Ethylacrylat, Butylacrylat, 2-Ethylhexylacrylat, Methylmethacrylat, Ethylmethacrylat, Butylmethacrylat, Hexylmethacrylat, Octylmethacrylat und 2-Ethylhexylmethacrylat,
(g) Acrylsäureamide und Methacrylsäureamide, z. B. Acrylsäureamid, N-Methylolacrylsäureamid, Methacrylsäureamid und N-Methylolmethacrylsäureamid,
(h) Ethylen,
(i) Styrol und Methylstyrol, oder
(k) Butadien und Isopren.

Besonders geeignete Monomere sind die Vinylester (a), die Vinylether (b), die Vinylhalogenide (d) und die Acrylsäureester und Methacrylsäureester (f). Die Monomeren werden einzeln oder im Gemisch miteinander eingesetzt; Monomerkombinationen werden beispielsweise gebildet aus einem Acrylsäureester und einem Methacrylsäureester, einem Acryl- oder Methacrylsäureester und einem Vinylester sowie einem Gemisch verschiedener Vinylester, insbesondere Vinylacetat und Vinylestern eines Gemisches von Monocarbonsäuren mit 9 bis 11 Kohlenstoffatomen, ferner aus Vinylacetat und Ethylen sowie aus Vinylacetat, Ethylen und Vinylchlorid.

Die Polymerisation erfolgt üblicherweise in Gegenwart eines radikalbildenden Initiators, vorzugsweise einer Peroxidverbindung oder einer aliphatischen Azoverbindung. Der Initiator ist öllöslich oder vorzugsweise wasserlöslich; er wird in einer Menge von 0,05 bis 2 Gewichtsprozent, vorzugsweise 0,1 bis 1 Gewichtsprozent, eingesetzt (bezogen auf die Gesamtmenge der Monomeren). Es eignen sich insbesondere Wasserstoffperoxid, Alkali- oder Ammoniumsalze der Perschwefelsäure, der Peroxydischwefelsäure oder der Peroxydiphosphorsäure, z. B. Natriumpersulfat, Kaliumperoxydisulfat und Ammoniumperoxydisulfat, ferner Alkylhydroperoxide wie t-Butylhydroperoxid, Dialkylperoxide wie Di-t-butylperoxid, Diacylperoxide wie Diacetylperoxid, Dilauroylperoxid und Dibenzoylperoxid, sowie Azodiisobuttersäurenitril, Azodicarbonamid und Azo-$\gamma,\gamma'$-bis(4-cyanvaleriansäure). Der Initiator wird gegebenenfalls zusammen mit einem Reduktionsmittel eingesetzt, insbesondere mit einem Ammoniumsalz, Alkalisalz oder Erdalkalisalz einer reduzierend wirkenden schwefelhaltigen Säure; vorzugsweise eignen sich Sulfite, Bisulfite, Pyrosulfite, Dithionite, Thiosulfate und Formaldehydsulfoxylate. Die Menge des Reduktionsmittels beträgt 0,05 bis 20 Gewichtsprozent, vorzugsweise 0,5 bis 10 Gewichtsprozent (bezogen auf das Styrol/Maleinsäureanhydrid-Copolymer).

Zur Erhöhung der Polymerisationsgeschwindigkeit ist es vorteilhaft, eine Lösung oder Dispersion eines hydrolysierten Styrol/Maleinsäureanhydrid-Copolymers zu verwenden, deren Herstellung in Gegenwart eines Sulfits durchgeführt worden ist. Als Sulfite sind neutrale oder saure Salze der schwefligen oder pyroschwefligen Säure geeignet, insbesondere Ammoniumsalze, Alkalisalze und Erdalkalisalze. Das Sulfit wird gegebenenfalls in einer Menge von 0,05 bis 20 Gewichtsprozent, vorzugsweise 0,5 bis 10 Gewichtsprozent (bezogen auf das Styrol/Maleinsäureanhydrid-Copolymer) eingesetzt.

Bei der Emulsionspolymerisation wird die Lösung oder Dispersion des hydrolysierten Styrol/Maleinsäureanhydrid-Copolymers in einer solchen Menge eingesetzt, daß das Copolymer in einer Menge von 0,1 bis 10 Gewichtsprozent, vorzugsweise 0,5 bis 5 Gewichtsprozent (bezogen auf die Gesamtmenge der Monomeren), vorliegt. Bei der Suspensionspolymerisation genügen 0,01 bis 2 Gewichtsprozent, vorzugsweise 0,05 bis 1 Gewichtsprozent, des Comonomers (bezogen auf die Gesamtmenge der Monomeren). Die Polymerisation erfolgt jeweils bei einer Temperatur von 25 bis 90°C, vorzugsweise 40 bis 75°C. Je nach Art und Menge der beteiligten Monomeren liegt die Polymerisationszeit im Bereich von 2 bis 8 Stunden, vorzugsweise 2,5 bis 5 Stunden.

Die resultierenden Polymer-Dispersionen sind ih hohem Maße stabil gegenüber Scherkräften und zeigen ein sehr gutes Pigmentbindevermögen. Sie finden daher vor allem Anwendung als Bindemitteldispersionen in Anstrichmitteln, insbesondere Dispersionsfarben und Papierstreichmassen. Das damit behandelte Papier zeichnet sich durch hohe Rupffestigkeit und Strichwasserfestigkeit aus.

Die Erfindung wird durch die folgenden Beispiele erläutert. Prozentangaben bezeihen sich jeweils auf das Gewicht.

## Beispiel 1

150 g eines Copolymers aus Styrol und Maleinsäureanhydrid (Molverhältnis 2 : 1), das ein mittleres Molekulargewicht von 1700 aufweist, werden zusammen mit 790 g Wasser und 7,05 g Ätznatron in einem Rührgefäß mit Rückflußkühler 2 Stunden lang auf eine Temperatur von 95–100°C erhitzt und dann auf Raumtemperatur abgekühlt. Man erhält eine klare Lösung mit einem pH-Wert von 4,7 und einem Polymergehalt von 16,5%. Die Carboxylgruppen des hydrolysierten Copolymers sind zu 18% neutralisiert.

## Beispiel 2

a) Beispiel 1 wird wiederholt, jedoch werden statt 7,05 g Ätznatron nun 3,52 g Ätznatron und statt 790 g Wasser 720 g Wasser eingesetzt. Außerdem wird das Reaktionsgemisch nach dem Abkühlen auf Raumtemperatur filtriert; dabei verbleibt ein Rückstand von 30,9 g (nach Trocknen). Man erhält als Filtrat eine Dispersion mit einem pH-Wert von 4,1 und einem Polymergehalt von 14,9%.

b) 8 g der nach a) erhaltenen Dispersion werden zusammen mit 2 g einer 15%igen wäßrigen Lösung von Natriumlaurylsulfat auf 70° C erhitzt, wobei das Copolymer in Lösung geht.

c) 8 g der nach a) erhaltenen Dispersion werden zusammen mit 2 g einer 15%igen wäßrigen Lösung des Ammoniumsalzes eines mit 25 Mol Ethylenoxid oxethylierten und dann sulfatierten Nonylphenols als Emulgator auf 80° C erhitzt, wobei das Copolymer in Lösung geht.

## Beispiel 3

300 g eines Copolymers aus Styrol und Maleinsäureanhydrid (Molverhältnis 3 : 1) mit einem mittleren Molekulargewicht von 1900 werden zusammen mit 1680 g Wasser und 29,3 g Ätznatron in einem Rührgefäß mit Rückflußkühler 2 Stunden lang auf eine Temperatur von 96° C erhitzt und dann auf Raumtemperatur abgekühlt. Man erhält eine Lösung mit einem pH-Wert von 6,8 und einem Polymergehalt von 16,7%. Die Carboxylgruppen des hydrolysierten Copolymers sind zu 50% neutralisiert.

## Beispiel 4

In einem Rührgefäß mit Rückflußkühler werden 150 g eines Copolymers aus Styrol und Maleinsäureanhydrid (Molverhältnis 3 : 1) mit einem mittleren Molekulargewicht von 1900 zusammen mit 790 g Wasser und 25 g einer 25prozentigen wäßrigen Ammoniaklösung 2 Stunden lang auf eine Temperatur von 100° C erhitzt und dann auf Raumtemperatur abgekühlt. Man erhält eine Lösung mit einem pH-Wert von 6,8 und einem Polymergehalt von 16,1%. Die Carboxylgruppen des hydrolysierten Copolymers sind zu 50% neutralisiert.

## Beispiel 5

a) 150 g eines Copolymers aus Styrol und Maleinsäureanhydrid (Molverhältnis 3 : 1) mit einem mittleren Molekulargewicht von 1900 werden zusammen mit 720 g Wasser und 7,3 g Ätznatron in einem Rührgefäß mit Rückflußkühler 3 Stunden lang auf eine Temperatur von 97° C erhitzt und dann auf Raumtemperatur abgekühlt. Man erhält eine Dispersion mit einem pH-Wert von 5,6 und einem Polymergehalt von 17,6%. Die Carboxylgruppen des hydrolysierten Copolymers sind zu 25% neutralisiert. Der mittlere Durchmesser der dispergierten Polymerpartikel beträgt 0,038 µm.

b) 8 g der nach a) erhaltenen Dispersion werden mit 2 g einer 15%igen wäßrigen Lösung von Natriumlaurylsulfat auf 85° C erhitzt; dabei geht das Copolymer in Lösung.

c) 8 g der nach a) erhaltenen Dispersion werden mit 2 g einer 15%igen wäßrigen Lösung des Emulgators aus Beispiel 2c) auf 90° C erhitzt; dabei geht das Copolymer in Lösung.

## Beispiel 6 bis 8

Jeweils 150 g eines Copolymers aus Styrol und Maleinsäureanhydrid (Molverhältnis 3 : 1) mit einem mittleren Molekulargewicht von 1900 werden zusammen mit jeweils 720 g Wasser und verschiedenen Mengen Lithiumhydroxid in einem Rührgefäß mit Rückflußkühler unterschiedlich lange auf eine Temperatur von 97° C erhitzt und dann auf Raumtemperatur abgekühlt. Die Einzelheiten und Eigenschaften der jeweils erhaltenen Lösung oder Dispersion sind aus Tabelle 1 ersichtlich.

Tabelle 1

| Beispiel | 6 | 7 | 8 |
|---|---|---|---|
| Menge LiOH (g) | 4,4 | 3,3 | 2,2 |
| Behandlungsdauer (h) | 2 | 2 | 3 |
| Ergebnis | Lösung | Dispersion | Dispersion |
| pH-Wert | 5,3 | 5,1 | 4,7 |
| Polymergehalt (%) | 17,6 | 17,3 | 16,9 |
| neutralisierte Carboxylgruppen (%) | 25 | 18,7 | 12,5 |

## Beispiel 9

150 g eines Copolymers aus Styrol und Maleinsäureanhydrid (Molverhältnis 3 : 1) mit einem mittleren Molekulargewicht von 1900 werden zusammen mit 1300 g Wasser, 7,3 g Ätznatron, 125 g einer 30%igen Lösung des Emulgators aus Beispiel 2c) und 12 g Natriumpyrosulfit unter Stickstoffüberlagerung in einem Rührgefäß mit Rückflußkühler 2 Stunden auf eine Temperatur von 96° C erhitzt und dann auf Raumtemperatur abgekühlt. Man erhält eine Lösung mit einem pH-Wert von 5,3 und einem Polymergehalt von 13,3%. Die Carboxylgruppen des hydrolysierten Copolymers sind zu 25% neutralisiert.

Die Lösung wird für den Einsatz bei der Polymerisation von Vinylacetat mit Wasser auf eine Konzentration von 7,8% eingestellt.

## Beispiel 10

150 g eines Copolymers aus Styrol und Maleinsäureanhydrid (Molverhältnis 2 : 1) mit einem mittleren Molekulargewicht von 1700 werden zusammen mit 1300 g Wasser, 7,3 g Ätznatron, 125 g einer 30%igen wäßrigen Lösung des Emulgators aus Beispiel 2c) und 12 g Natriumpyrosulfit unter Stickstoffüberlagerung in einem Rührgefäß mit Rückflußkühler 2 Stunden lang auf eine Temperatur von 96° C erhitzt und dann auf Raumtemperatur abgekühlt. Man erhält eine Lösung mit einem pH-Wert von 4,3 und einem Polymergehalt von 13%. Die Carboxylgruppen des hydrolysierten Copolymers sind zu 18,6% neutralisiert.

Die Lösung wird für den Einsatz bei der Polymerisation von Vinylacetat mit Wasser auf eine Konzentration von 7,8% eingestellt.

## Anwendungsbeispiel 1

In einem Rührgefäß werden 510 g Wasser, 1,77 g einer 6%igen wäßrigen Natriumalkylsulfonat-Lösung (mittlere Kettenlänge der Alkylgruppe: 12 bis 14 Kohlenstoffatome) und 2 g einer 30%igen wäßrigen Lösung des Ammoniumsalzes eines mit 25 Mol Ethylenoxid oxethylierten und dann sulfatierten Nonylphenols vorgelegt und mit Stickstoff gespült. Nach Zugabe einer Lösung von 2,25 g Ammoniumpersulfat in 20 g Wasser wird das Gemisch auf eine Temperatur von 50° C erhitzt. Unter Einhaltung dieser Temperatur werden dem Gemich im Laufe von 3 Stunden getrennt voneinander 750 g Vinylacetat und eine Lösung von 0,39 g Natriumformaldehydsulfoxylat in 50 g Wasser gleichmäßig zugeführt. Während der 1. Stunde wird zusätzlich nochmals die gleiche Menge der Emulgatorkombination der Vorlage zugegeben; während der darauffolgenden 2 Stunden werden noch 100 g der nach Beispiel 9 erhaltenen Copolymer-Lösung sowie 1,87 g einer wäßrigen Natriumalkylsulfonat-Lösung mit einem Feststoffgehalt von 60% und 21,2 g der vorgenannten 30%igen Ammoniumsalz-Lösung zudosiert. Danach wird das Gemisch mit einer Lösung von 0,75 g Ammoniumpersulfat in 30 g Wasser versetzt und 30 min lang auf eine Temperatur von 75° C erhitzt und dann auf Raumtemperatur abgekühlt.

Man erhält eine koagulatfreie Polyvinylacetat-Dispersion, die mit 3,2 g 12,5%iger Ammoniaklösung auf einen pH-Wert von 6 eingestellt wird. Der Feststoffgehalt der Dispersion beträgt 50,8%, und die Polymerpartikel haben einen mittleren Durchmesser von 0,22 µm. Die Dispersion ist scherstabil, denn nach 2minütigem Rühren mit einem Schnellrührer (5000 UpM) tritt keine Koagulatbildung auf und die mittlere Partikelgröße des Polymers verändert sich nicht.

Anwendungsbeispiel 2

Anwendungsbeispiel 1 wird wiederholt, jedoch wird statt der nach Beispiel 9 erhaltenen Copolymer-Lösung nun die nach Beispiel 10 erhaltene Copolymer-Lösung eingesetzt. Die jeweils erhaltene Polyvinylacetat-Dispersion ist koagulatfrei. Der Feststoffgehalt der Dispersion beträgt 50,4%, und die Polymerpartikel haben einen mittleren Durchmesser von 0,18 µm. Die Dispersion ist scherstabil (Prüfung analog Anwendungsbeispiel 1).

Vergleichsbeispiel 1

1620 g des in Beispiel 3 verwendeten Styrol/Maleinsäureanhydrid-Copolymers werden in 8024 g Wasser unter Zugabe von 316 g Ätznatron 6¾ Stunden lang bei einer Temperatur von 80°C gerührt. Die nach Abkühlen auf Raumtemperatur erhaltene Suspension wird filtriert; dabei ergibt sich ein fester Rückstand von 47 g. Das Filtrat hat einen pH-Wert von 10,0 und einen Polymergehalt von 18,7%. Die Carboxylgruppen des hydrolysierten Copolymers sind zu 100% neutralisiert.

Vergleichsbeispiel 2

Beispiel 4 wird wiederholt, wobei die Erhitzungstemperatur jedoch nur 70°C beträgt. Dabei gehen nur 50% des Styrol/Maleinsäureanhydrid-Copolymers in Lösung; die Lösung zeigt einen pH-Wert von 5,2.

Vergleichsbeispiel 3

Beispiel 4 wird wiederholt, wobei die Erhitzungstemperatur jedoch nur 70°C beträgt und die doppelte Menge Ammoniaklösung verwendet wird. Die erhaltene Lösung zeigt einen pH-Wert von 9,3.

Vergleichsbeispiel 4

Anwendungsbeispiel 1 wird wiederholt, wobei die nach Beispiel 9 erhaltene Copolymer-Lösung durch Wasser ersetzt wird. Die erhaltene Polyvinylacetat-Dispersion koaguliert bei der Prüfung auf Scherstabilität.

Vergleichsbeispiel 5

Anwendungsbeispiel 1 wird wiederholt, wobei die nach Beispiel 9 erhaltene Copolymer-Lösung durch eine entsprechend hergestellte Lösung eines Styrol/Maleinsäureanhydrid-Copolymers (Molverhältnis 1 : 1) mit einem mittleren Molekulargewicht von 1600, dessen Carboxylgruppen nach der Hydrolyse zu 12,3% neutralisiert sind, ersetzt wird. Die erhaltene Polyvinylacetat-Dispersion koaguliert bei der Prüfung auf Scherstabilität.

**Patentansprüche**

1. Wäßrige Lösung oder Dispersion eines hydrolysierten Copolymers aus Styrol und Maleinsäureanhydrid mit einem Styrol/Maleinsäureanhydrid-Molverhältnis von größer als 1 : 1 und einem Molekulargewicht (Zahlenmittel) von mehr als 400, dadurch gekennzeichnet, daß das Copolymer ein Molverhältnis im Bereich von 1,5 : 1 bis 6 : 1 und ein Molekulargewicht von 500 bis 80 000 aufweist, 1 bis 60 Prozent der Carboxylgruppen des Copolymers neutralisiert sind und der pH-Wert der Lösung oder Dispersion kleiner als 7 ist.
2. Lösung oder Dispersion nach Anspruch 1, dadurch gekennzeichnet, daß das Copolymer ein Styrol/Maleinsäureanhydrid-Molverhältnis von 1,6 : 1 bis 4 : 1 aufweist.
3. Lösung oder Dispersion nach Anspruch 1, dadurch gekennzeichnet, daß das Copolymer ein Molekulargewicht von 800 bis 30 000 aufweist.
4. Lösung oder Dispersion nach Anspruch 1, dadurch gekennzeichnet, daß 6 bis 50 Prozent der Carboxylgruppen des Copolymers neutralisiert sind.
5. Verfahren zur Herstellung einer wäßrigen Lösung oder Dispersion eines hydrolysierten Copolymers aus Styrol und Maleinsäureanhydrid, das ein Styrol/Maleinsäureanhydrid-Molverhältnis von größer als 1 : 1 und ein Molekulargewicht (Zahlenmittel) von mehr als 400 aufweist, gemäß Anspruch 1, durch Hydrolyse eines Styrol/Maleinsäureanhydrid-Copolymers und teilweise

Neutralisation mit einem anorganischen Neutralisationsmittel, dadurch gekennzeichnet, daß ein Copolymer mit einem Styrol/Maleinsäureanhydrid-Molverhältnis von 1,5 : 1 bis 6 : 1 und einem Molekulargewicht von 500 bis 80 000 in Gegenwart von Wasser und in Gegenwart von so viel Ammoniak oder eines Alkalihydroxids oder eines Erdalkalihydroxids oder Zinkoxids auf eine Temperatur von 75 bis 250° C erhitzt wird, daß 1 bis 60% der Carboxylgruppen des Copolymers neutralisiert werden.

6. Verfahren nach Anspruch 5, dadurch gekennzeichnet, daß das Copolymer in einer Konzentration von 5 bis 50 Gewichtsprozent (bezogen auf die Gesamtmenge aus Copolymer und Wasser) verwendet wird.

7. Verfahren nach Anspruch 5, dadurch gekennzeichnet, daß das Erhitzen in Gegenwart eines anionischen Emulgators durchgeführt wird.

8. Verwendung der Lösung oder Dispersion gemäß Anspruch 1 als Stabilisatorlösung oder -dispersion für wäßrige Dispersionen.

9. Verwendung der Lösung oder Dispersion gemäß Anspruch 1 als Stabilisatorlösung oder -dispersion bei der Dispersionspolymerisation von Vinylverbindungen.

**Claims**

1. Aqueous solution or dispersion of a hydrolyzed copolymer of styrene and maleic anhydride having a molar ratio of styrene to maleic anhydride superior to 1 : 1 and a molecular weight (numerical average) of more than 400, characterized in that the copolymer has a molar ratio in the range of from 1.5 : 1 to 6 : 1 and a molecular weight of from 500 to 80 000, 1 to 60 percent of the carboxyl groups of the copolymer are neutralized, and the pH of the solution or dispersion is below 7.

2. Solution or dispersion according to claim 1, characterized in that the copolymer has a molar ratio of styrene to maleic anhydride of from 1.6 : 1 to 4 : 1.

3. Solution or dispersion according to claim 1, characterized in that the copolymer has a molecular weight of from 800 to 30 000.

4. Solution or dispersion according to claim 1, characterized in that from 6 to 50 percent of the carboxyl groups of the copolymer are neutralized.

5. Process for the preparation of an aqueous solution or dispersion of a hydrolyzed copolymer of styrene and maleic anhydride having a molar ratio of styrene to maleic anhydride superior to 1 : 1 and a molecular weight (numerical average) of more than 400 according to claim 1, by hydrolysis of a styrene/maleic anhydride copolymer and partial neutralization with an inorganic neutralizing agent, characterized in that a copolymer having a molar ratio of styrene to maleic anhydride of from 1.5 : 1 to 6 : 1 and a molecular weight of from 500 to 80 000 is heated in the presence of water and in the presence of such an amount of ammonia, an alkali metal hydroxide or alkaline earth metal hydroxide, or zinc oxide to a temperature of from 75 to 250° C so that 1 to 60 percent of the carboxyl groups of the copolymer are neutralized.

6. Process according to claim 5, characterized in that the copolymer is used in a concentration of from 5 to 50% by weight (relative to the total amount of copolymer and water).

7. Process according to claim 5, characterized in that the heating is conducted in the presence of an anionic emulsifier.

8. Use of the solution or dispersion according to claim 1 as a stabilizer-solution or -dispersion in aqueous dispersions.

9. Use of the solution or dispersion according to claim 1 as a stabilizer-solution or -dispersion in the dispersion polymerization of vinyl compounds.

**Revendications**

1. Solution ou dispersion aqueuse d'un copolymère hydrolysé du styrène et de l'anhydride maléique dont le rapport molaire styrène/anhydride maléique est supérieur à 1 : 1 et dont la masse moléculaire (moyenne en nombre) est supérieure à 400, caractérisée en ce que le copolymère a un rapport molaire situé dans l'intervalle allant de 1,5 : 1 à 6 : 1 et une masse moléculaire comprise entre 500 et 80 000, de I à 60% des groupes carboxy du copolymère sont neutralisés et le pH de la solution ou dispersion est inférieur à 7.

2. Solution ou dispersion selon la revendication 1, caractérisée en ce que le copolymère a un rapport molaire styrène/anhydride maléique compris entre 1,6 : 1 et 4 : 1.

3. Solution ou dispersion selon la revendication 1, caractérisée en ce que le copolymère a une masse moléculaire comprise entre 800 et 30 000.

4. Solution ou dispersion selon la revendication 1, caractérisée en ce que de 6 à 50% des groupes carboxy du copolymère sont neutralisés.

5. Procédé de préparation d'une solution ou dispersion aqueuse d'un copolymère styrène/anhydride maléique hydrolysé dont le rapport molaire du styrène à l'anhydride maléique est supérieur à 1 : 1 et

dont la masse moléculaire (moyenne en nombre) est supérieure à 400, selon la revendication 1, par hydrolyse d'un copolymère styrène/anhydride maléique et neutralisation partielle au moyen d'un agent neutralisant minéral, procédé caractérisé en ce qu'on chauffe à une température de 75 à 250°C un copolymère dont le rapport molaire du styrène à l'anhydride maléique est compris entre 1,5 : 1 et 6 : 1 et dont la masse moléculaire est comprise entre 500 et 80 000, en présence d'eau et en présence d'une quantité d'ammoniac ou d'un hydroxyde de métal alcalin ou de métal alcalino-terreux ou d'oxyde de zinc telle que de 1 à 60% des groupes carboxy du copolymère soient neutralisés.

6. Procédé selon la revendication 5, caractérisé en ce que le copolymère est utilisé en une concentration de 5 à 50% en poids (par rapport à la quantité totale du copolymère et de l'eau).

7. Procédé selon la revendication 5, caractérisé en ce que le chauffage est effectué en présence d'un émulsionnant anionique.

8. Application de la solution ou dispersion selon la revendication 1 comme solution ou dispersion stabilisante pour des dispersions aqueuses.

9. Application de la solution ou dispersion selon la revendication 1 comme solution ou dispersion stabilisante dans la polymérisation en dispersion de composés vinyliques.